# EUROPÄISCHE PATENTSCHRIFT

(11) **EP 2 393 647 B1**
(45) Veröffentlichungstag und Bekanntmachung des Hinweises auf die Patenterteilung: **17.04.2013**
(21) Anmeldenummer: 10702870.6
(22) Anmeldetag: 05.02.2010
(51) Int. Cl.: B29C 49/00, B29C 47/58, B29C 47/82

(54) **VERFAHREN ZUR HERSTELLUNG VON FORMTEILEN AUS EINEM POLYOXYMETHYLENPOLYMERISAT**
METHOD FOR PRODUCING MOLDED PARTS FROM A POLYOXYMETHYLENE POLYMER
PROCÉDÉ DE FABRICATION DE PIÈCE MOULÉE CONSTITUÉE D'UN POLYMÉRISAT DE POLYOXYMÉTHYLÈNE

(30) Priorität: 09.02.2009 EP 09152399
(43) Veröffentlichungstag der Anmeldung: 14.12.2011
(73) Patentinhaber: BASF SE, 67056 Ludwigshafen (DE)
(72) Erfinder: WILHELM, Wolfgang, 67067 Ludwigshafen (DE); KLENZ, Rainer, 67454 Haßloch (DE); BINKOWSKI, Dirk, 68165 Mannheim (DE)
(86) Internationale Anmeldenummer: PCT/EP2010/051419
(87) Internationale Veröffentlichungsnummer: WO 2010/089369

(56) Entgegenhaltungen:
- EP-A1- 0 414 060
- EP-A2- 0 568 308
- WO-A1-2005/007384
- JP-A- 4 163 022
- JP-A- 9 327 855
- US-A- 3 954 366
- US-A- 4 046 738
- US-A- 4 100 245
- US-A1- 2003 128 623

## Beschreibung

Die Erfindung betrifft ein Verfahren zur Herstellung von Formteilen aus einem Polyoxymethylenpolymerisat durch Blasformen.

Blasformverfahren werden insbesondere eingesetzt, um Hohlkörper herzustellen. Hierbei kann es sich zum Beispiel um Speicherbehälter oder Transportbehälter, beispielsweise für gasförmige, flüssige oder feste Medien handeln. Solche Speicher oder Behälter sind zum Beispiel Flaschen, Tanks oder ähnliches.

Bei Blasformverfahren wird üblicherweise ein Polymerhalbzeug, im Allgemeinen ein Granulat, in einem Extruder aufgeschmolzen und zu einem Schlauch extrudiert. Der Schlauch wird dann in einem Blasformwerkzeug zum Hohlkörper geformt, indem in den Schlauch ein Dorn eingeführt wird und durch den Dorn ein unter Druck stehendes Gas in den Schlauch eingeblasen wird, wodurch der Schlauch gegen die Wandungen des Blasformwerkzeuges gepresst wird. Das Blasformwerkzeug weist dabei Temperaturen unterhalb der Schmelztemperatur des Polymers auf, so dass dieses im Werkzeug erstarrt.

Ein Blasformverfahren zur Herstellung von Formteilen aus Polyoxymethylen/Polyurethan-Mischungen ist zum Beispiel aus EP-A 0 121 407 bekannt. Das Polyurethan wird zur Verbesserung der Eigenschaften des Polyoxymethylens zugegeben.

Ein Verfahren zur Herstellung von Formteilen durch Blasformen aus Polyoxymethylenharzen ist zum Beispiel auch aus EP-A 0 568 308 bekannt. Das eingesetzte Polyoxymethylencopolymer weist eine im Wesentlichen lineare molekulare Struktur auf.

Ein weiteres Verfahren zur Herstellung von blasgeformten Polyoxymethylen-Formteilen ist in EP 0 568 308 A2 offenbart.

Zum Aufschmelzen haben sich Extruder mit genuteten Einzugszonen etabliert. Solche Extruder mit genuteten Einzugszonen sind zum Beispiel in D. Boes et al., 30 Jahre Nutenextruder, in Kunststoffe 80, 1990, Nr. 6, Seiten 659-664 beschrieben. In derartigen Extrudern mit genuteter Einzugszone wird die Polymerfördermenge durch die Einzugszone bestimmt. In der Einzugszone von Extrudern mit genuteter Einzugszone wird das Polymergranulat komprimiert und gefördert, wodurch ein hoher Druck erzeugt wird. Ein Aufschmelzen des Granulates in der Einzugszone wird durch Kühlung verhindert. Die übliche Fahrweise des Einschneckenextruders mit genuteter Einzugszone hat jedoch bei der Verarbeitung von Polyoxymethylenpolymerisaten zu Blasformteilen den Nachteil, dass die durch das Blasformverfahren hergestellten Formteile schlechte mechanische Eigenschaften, zum Beispiel eine niedrige Bruchdehnung und einen reduzierten Berstdruck, aufweisen. Zudem können ungleichmäßige Wanddicken und Bindenähte im Blasformteil auftreten.

Aufgabe der vorliegenden Erfindung ist es daher, ein Verfahren zur Herstellung von Formteilen aus Polyoxymethylenpolymerisaten durch Blasformen bereitzustellen, mit dem Formteile hergestellt werden können, die ein verbessertes mechanisches Eigenschaftsprofil aufweisen.

Gelöst wird die Aufgabe durch ein Verfahren zur Herstellung von Formteilen aus einem Polyoxymethylenpolymerisat durch Blasformen, das folgende Schritte umfasst:
(a) Extrudieren des Polyoxymethylenpolymerisats zu einem Schlauch mit einem Extruder mit genuteter Einzugszone, wobei die Einzugszone auf eine Temperatur im Bereich von 100 bis 230°C geheizt wird,
(b) Einbringen des extrudierten Schlauches aus dem Polyoxymethylenpolymerisat in ein Blasformwerkzeug,
(c) Erzeugen des Formteils aus dem extrudierten Schlauch im Blasformwerkzeug.

Entgegen den derzeit eingesetzten üblichen Verfahren wird die Einzugszone gemäß dem erfindungsgemäßen Verfahren geheizt. Durch das Heizen der Einzugszone hat sich gezeigt, dass die mechanischen Eigenschaften des durch Blasformen hergestellten Formteils verbessert sind.

Das für das erfindungsgemäße Verfahren eingesetzte Polyoxymethylenpolymerisat ist vorzugsweise aufgebaut aus:
A) 99 bis 99,99 Gew.-% mindestens eines Polyoxymethylenhomo- oder -copolymerisats,
B) 0,01 bis 1 Gew.-% eines Vernetzers.

Die Massenanteile des Polyoxymethylenhomo- oder -copolymerisats und des Vernetzers sind dabei jeweils bezogen auf das zur Herstellung des Polyoxymethylenhomo- oder -copolymerisats eingesetzte Trioxan oder Formaldehyd.

Vorteil des Polyoxymethylpolymerisats, das aufgebaut ist aus mindestens einem Polyoxymethylenhomo- oder -copolymerisat und 0,01 bis 1 Gew.-% eines Vernetzers, ist, dass dieses einen größeren Erweichungsbereich aufweist als bekannte teilkristalline Thermoplaste. Dies ermöglicht einen verbesserten Einsatz auch bei Warmumformverfahren. Üblicherweise lassen sich teilkristalline Thermoplaste nur um oder oberhalb des Kristallitschmelzpunktes umformen. Der geeignete Temperaturbereich ist dabei sehr eng. Eine zu hohe Temperatur führt dazu, dass Halbzeuge zerfließen, bei einer nur minimalen Temperaturabsenkung sind die Halbzeuge zum Umformen bereits zu steif. Aus diesem Grund werden teilkristalline Thermoplaste derzeit üblicherweise nur unter ständiger Kontrolle durch Warmumformverfahren umgeformt, eine Automatisierung ist aufgrund der Eigenschaften der teilkristallinen Thermoplaste mit erheblichen Einschränkungen und nur mit großem Aufwand möglich. Diese Nachteile werden durch die Polyoxymethylen-Formmasse, die den Vernetzer enthält, vermieden. Insbesondere zeigt die Polyoxymethylen-Formmasse einen größeren Erweichungsbereich als bekannte teilkristalline Thermoplaste. Hierdurch wird ein größeres Verarbeitungsfenster ermöglicht. Dieses lässt auch eine Automatisierung des Formprozesses zu.

Als Erweichungsbereich wird der Bereich bezeichnet, in dem das Halbzeug sich unter angelegtem Verformungsdruck verformt, ohne zu zerfließen.

Polyoxymethylenhomo- oder copolymerisate sind dem Fachmann an sich bekannt und in der Literatur beschrieben.

Ganz allgemein weisen diese Polymere mindestens 50 mol-% an wiederkehrenden Einheiten -CH₂O- in der Polymerhauptkette auf. Bei Polyoxymethylenhomopolymeren handelt es sich im Allgemeinen um unverzweigte lineare Polymere, die in der Regel mindestens 80 %, vorzugsweise mindestens 90 %, Oxymethylen-Einheiten enthalten. Die Homopolymeren werden im Allgemeinen durch Polymerisation von Formaldehyd oder seiner zyklischen Oligomeren, wie Trioxan oder Tetroxan, hergestellt, vorzugsweise in der Gegenwart von geeigneten Katalysatoren.

Homopolymere des Formaldehyds oder Trioxans sind solche Polymere, deren Hydroxylendgruppen in bekannter Weise chemisch gegen Abbau stabilisiert sind, zum Beispiel durch Veresterung oder Veretherung. Copolymere sind Polymere aus Formaldehyd oder seinen cyclischen Oligomeren, insbesondere Trioxan, und cyclischen Ethern, cyclischen Acetalen und/oder linearen Polyacetalen.

Im Rahmen der Erfindung werden Polyoxymethylencopolymere als Komponente A bevorzugt, insbesondere solche, die neben den wiederkehrenden Einheiten -CH₂O-noch bis zu 50, vorzugsweise 0,1 bis 20, insbesondere 0,3 bis 10 mol-%, und ganz besonders bevorzugt 0,02 bis 2,5 mol-% an wiederkehrenden Einheiten 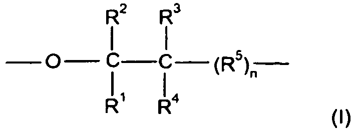 aufweisen, wobei
- R¹ bis R⁴: unabhängig voneinander ein Wasserstoffatom, eine C₁-C₄-Alkylgruppe oder eine halogensubstituierte Alkylgruppe mit 1 bis 4 C-Atomen und
- R⁵: eine -CH₂-, CH₂O-, eine C₁-C₄-alkyl- oder C₁-C₄-haloalkylsubstituierte Methylengruppe oder eine entsprechende Oxymethylengruppe darstellen und
- n: einen Wert im Bereich von 0 bis 3 hat.

Vorteilhafterweise können diese Gruppen durch Ringöffnung von cyclischen Ethern in die Copolymere eingeführt werden. Bevorzugte cyclische Ether sind solche der Formel 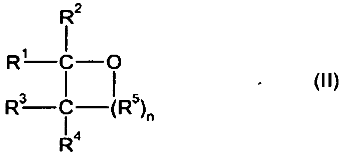 wobei
- R¹ bis R⁵ und n: die oben genannte Bedeutung haben.

Nur beispielsweise seien Ethylenoxid, 1,2-Propylenoxid, 1,2-Butylenoxid, 1,3-Butylenoxid, 1,3-Dioxan, 1,3-Dioxolan und 1,3-Dioxepan als cyclische Ether genannt sowie lineare Oligo- oder Polyformale, wie Polydioxolan oder Polydioxepan, als Comonomere genannt.

Als Vernetzer B wird für das erfindungsgemäße Verfahren beispielsweise eine bifunktionelle Verbindung eingesetzt, die zwei höhere cyclische Ether der allgemeinen Formel (II) enthält, die über die Einheit Z miteinander verbunden sind.

Vorzugsweise enthält das für das erfindungsgemäße Verfahren eingesetzte Polyoxymethylenpolymerisat als Komponente B eine bifunktionelle Verbindung der Formel 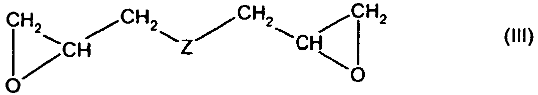 und/oder 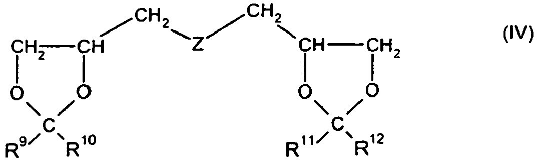 wobei
- Z: eine chemische Bindung, -O-, -OR⁶O-, -R⁷-, -R⁷OR⁸-, -(O-CH₂-CH₂)ₙ-O- oder -(O-CH₂)ₙ-O- ist. Darin bedeuten
R⁶ C₁-C₈-Alkylen oder C₃-C₈-Cycloalkylen,
R⁷ und R⁸ jeweils unabhängig voneinander eine C₁-C₁₂-Alkylengruppe und
n eine Zahl zwischen 1 und 4.

Bevorzugt ist Z eine chemische Bindung, -O- oder -OR⁶O-, wobei
- R⁶: die vorstehend genannte Bedeutung hat.

Die Verknüpfung Z wird vorzugsweise so ausgewählt, dass sie gegen die für die Polymerisation von Formaldehyd und seiner cyclischen Oligomeren, wie Trioxan und Tetroxan bekannten kationisch wirksamen Katalysatoren und Initiatoren stabil ist, d.h., dass die Verknüpfung Z nicht signifikant zu Abbruch-, Übertragungs- und sonstigen Reaktionen führen darf.

Die Reste R⁹ bis R¹² in der bifunktionellen Verbindung der Formel (IV) sind jeweils unabhängig voneinander Wasserstoff oder eine C₁-C₄-Alkylgruppe. Bevorzugt sind die Reste R⁹ bis R¹² Wasserstoff, ganz besonders bevorzugt wird als Vernetzer B eine bifunktionelle Verbindung der Formel (IV) eingesetzt, bei der Z Sauerstoff und die Reste R⁹ bis R¹² Wasserstoff sind.

Bevorzugte Monomere dieser Art sind Ethylendiglycid, Diglycidylether und Diether aus Glycidylen und Formaldehyd, Dioxan oder Trioxan im Molverhältnis 2:1 sowie Diether aus 2 mol Glycidylverbindung und 1 mol eines aliphatischen Diols mit 2 bis 8 C-Atomen, wie beispielsweise Diglycidylether von Ethylenglykol, 1,4-Butandiol, 1,3-Butandiol, Cyclobutan-1,3-diol, 1,2-Propandiol und Cyclohexan-1,4-diol, um nur einige Beispiele zu nennen.

Besonders bevorzugt als Komponente B wird Diglycerindiformal eingesetzt. Dieses lässt sich relativ einfach und mit guter Ausbeute aus linearem Diglycerin und Formaldehyd (als wässrige Lösung Paraformaldehyd oder Trioxan) in Gegenwart eines sauren Katalysators herstellen. Als Hauptprodukt erhält man 4,4'-bis-(1,3-Dioxolanylmethyl)oxid. Dieses ist entsprechend der allgemeinen Struktur (IV) aufgebaut, wobei
- Z: Sauerstoff und
- die Reste R⁹ bis R¹²: Wasserstoff sind.

Bei Verwendung von Diglycerin, das vorwiegend aus der linearen Verbindung besteht, daneben aber noch verzweigte Isomere enthält, führt die Umsetzung mit Formaldehyd zu einem Gemisch von Isomeren, wie Glycerindiformalen, deren Hauptbestandteil die oben genannte Verbindung darstellt. Dieses Gemisch eignet sich ebenso wie die reine Substanz. Das Diglycerindiformal wird üblicherweise in Mengen von 0,01 bis 1 Gew.-%, bevorzugt im Bereich von 0,05 bis 0,3 Gew.-% und insbesondere im Bereich von 0,1 bis 0,2 Gew.-%, bezogen auf das Gewicht des eingesetzten Trioxans, verwendet.

Verfahren zur Herstellung der vorstehend beschriebenen Homo- und Copolymerisate sind dem Fachmann bekannt und in der Literatur beschrieben.

Die bevorzugten Polyoxymethylencopolymere haben Schmelzpunkte von mindestens 150 °C (DSC, ISO 3146) und Molekulargewichte (Gewichtsmittelwert) M_{w} im Bereich von 5000 bis 300 000, vorzugsweise von 7000 bis 250 000 (GPC, Standard PMMA).

Endgruppenstabilisierte Polyoxymethylenpolymerisate, die an den Kettenenden C-C-Bindungen aufweisen, werden besonders bevorzugt.

Der Schmelzindex (MVR-Wert 190/2,16) der eingesetzten Polyoxymethylenpolymere liegt im Allgemeinen im Bereich von 0,5 bis 50 cm³/10 min (ISO 1133).

Weiterhin eignen sich als Vernetzer B auch
Erythritoldiformal 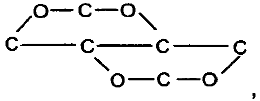 2,2-(Trimethylen)-bis-1,3-dioxolan 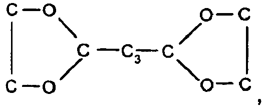 2,2-(Phenylen)-bis-1,3-dioxolan 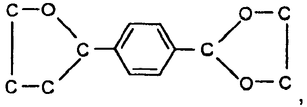 Pentaerythritoldiformal 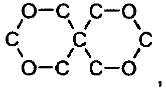 Pentaerythritoldiacetal 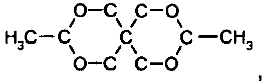 Pentaerythritoldibenzal 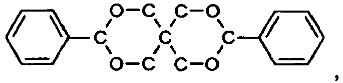 Pentaerythritoldichloral 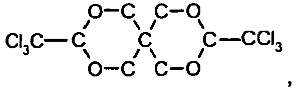 Pentaerythritoldipropionaldehydacetal 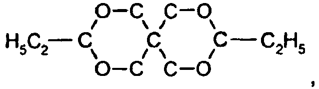 Diformal des Diethylsaccharats 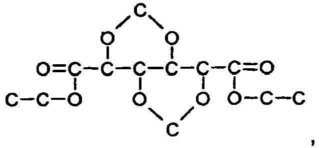 Sorbitoltriformal 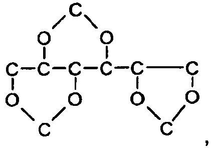 Pentaerythritoldiisovaleraldehydacetal 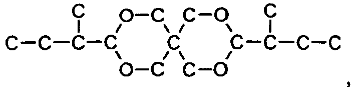 Polyvinylformal 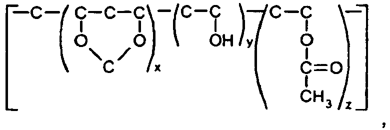 wobei x vorzugsweise 9- oder 10-mal so groß ist wie y und z,
Pentaerythritoldiacroleinacetal 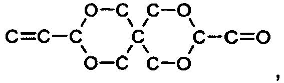 Pentaerythritoldiglyoxaldehydacetal 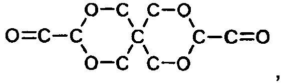 Pentaerythritoldi-p-nitrobenzaldehydacetal 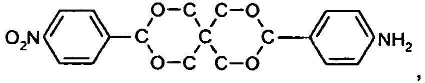 Diisopropylidenaldehyd-D-arabinose 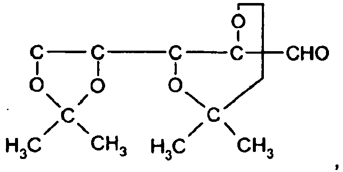 Dimethyleniditol 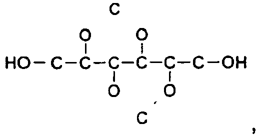 1,2:3,4:5,6-Triisopropylidenmannitol

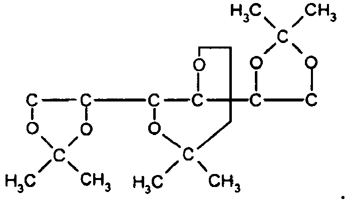

Weitere geeignete, Dioxacycloringe enthaltende Materialien umfassen Diacetale eines Dialdehyds und eines mehrwertigen Alkohols mit folgender Struktur: 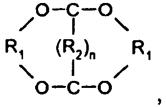 wobei R¹ aus einem mehrwertigen Alkohol R¹(OH)₂ mit 1 bis 8 Kohlenstoff-Atomen abgeleitet ist.

Von diesen bevorzugt ist das Diacetal des Malonaldehyds und Ethylenglykols mit folgender Struktur:

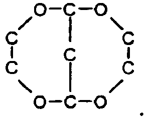

Weitere Dialdehyde, die verwendet werden können, sind zum Beispiel Oxaldehyd, Succinaldehyd, Glutaraldehyd und weitere.

Als mehrwertige Alkohole eignen sich zum Beispiel Glycerol, 1,2-Propylenglykol, 1,2-Butylenglykol, 1,3-Propylenglykol, Trimethylol-Propan, Sorbitol und Diethylenglykol. Das Halbzeug zur Herstellung von Formkörpern kann weiterhin bis zu 70 Gew.-%, vorzugsweise bis zu 50 Gew.-%, bezogen auf 100 Gew.-% der Komponenten A und B, sonstige Additive enthalten. Geeignete Additive sind beispielsweise
- Talkum,
- Polyamide, insbesondere Mischpolyamide,
- Erdalkalisilikate und Erdalkaliglycerophosphate,
- Ester oder Amide gesättigter aliphatischer Carbonsäuren,
- Ether, die sich von Alkoholen und Ethylenoxid ableiten,
- unpolare Propylenwachse,
- Füllstoffe, wie Glasfasern, Nanotubes, Wollastonit, Kreide, vorzugsweise mit Borsäure oder deren Derivaten als Synergisten,
- schlagzäh modifizierte Polymere, insbesondere solche auf Basis von Ethylen-Propylen (EPM)-Kautschuken, Methyl-Methacrylat-Butadien-Styrol (MBS)-Kautschuken oder Ethylen-Propylen-Dien (EPDM)-Kautschuken oder thermoplastischen Polyurethanen,
- Flammschutzmittel,
- Weichmacher,
- Haftvermittler,
- Farbstoffe und Pigmente,
- Formaldehyd-Fänger, Zeolithe oder Polyethylenimine, oder MelaminFormaldehyd-Kondensate,
- Antioxidantien, insbesondere solche mit phenolischer Struktur, Benzophenonderivate, Benzotriazolderivate, Acrylate, Benzoate, Oxaniline und sterisch gehinderte Amine (HALS = hindered amine light stabilizers).

Diese Zusatzstoffe sind bekannt und beispielsweise in Gächter/Müller, Plastics Additives Handbook, Hanser Verlag München, 4. Auflage 1993, Reprint 1996 beschrieben.

Die Menge der Additive hängt vom verwendeten Additiv und der gewünschten Wirkung ab. Dem Fachmann sind die üblichen Mengen bekannt. Die Additive werden, falls mitverwendet, in üblicher Weise zugefügt, beispielsweise einzeln oder gemeinsam, als solche, als Lösung bzw. Suspension oder bevorzugt als Masterbatch.

Die fertige Polyoxymethylen-Formmasse zur Herstellung des Halbzeugs kann in einem einzigen Schritt hergestellt werden, indem zum Beispiel das Polyoxymethylen und die Additive in einem Extruder, Kneter, Mischer oder einer anderen geeigneten Mischvorrichtung unter Aufschmelzen des Polyoxymethylens vermischt, die Mischung ausgetragen und anschließend üblicherweise granuliert wird. Es hat sich jedoch als vorteilhaft erwiesen, einige oder alle der Komponenten zunächst in einem Trockenmischer oder in einem anderen Mischapparat vorzumischen und die erhaltene Mischung in einem zweiten Schritt unter Aufschmelzen des Polyoxymethylens, gegebenenfalls unter Zugabe weiterer Komponenten, in einem Extruder oder sonstigen Mischvorrichtung zu homogenisieren. Insbesondere kann es vorteilhaft sein, zumindest das Polyoxymethylen und das Antioxidans (falls mitverwendet) vorzumischen.

Der Extruder beziehungsweise die Mischvorrichtung kann mit einer Entgasungsvorrichtung versehen sein, beispielsweise um Restmonomere oder sonstige flüchtige Bestandteile auf einfache Weise zu entfernen. Die homogenisierte Mischung wird wie üblich ausgetragen, vorzugsweise granuliert.

Die Additivzugabe kann besonders schonend ausgestaltet werden, indem die Verweilzeit zwischen dem Austrag aus der Entgasungsvorrichtung und dem Eintrag in die Mischvorrichtung, in der die Additive zugefügt werden, minimiert wird. Dazu kann beispielsweise der Entgasungstopf unmittelbar auf den Einzug des Extruders montiert werden, der zur Abmischung mit den Additiven verwendet wird.

Das so hergestellte Polyoxymethylenpolymerisat wird dann durch das erfindungsgemäße Verfahren zu Formteilen durch Blasformen verarbeitet. Hierzu wird das Polyoxymethylenpolymerisat dem Extruder zur Herstellung des Schlauches vorzugsweise als Granulat zugegeben. Ganz besonders bevorzugt ist es, wenn das Granulat auf eine Temperatur im Bereich von 60 bis 150°C, mehr bevorzugt im Bereich von 80 bis 140 °C und insbesondere im Bereich von 100 bis 130°C vorgewärmt wird. Durch das Vorwärmen lassen sich die mechanischen Eigenschaften des Formteils ebenfalls verbessern.

Zum Vorheizen des Granulats können zum Beispiel geeignete Vorlagebehälter mit Heizelementen eingesetzt werden. Hierzu können die Wandungen beispielsweise als Doppelmantel ausgeführt sein, der von einem Heizmedium durchströmt wird. Alternativ ist es jedoch zum Beispiel auch möglich, eine elektrische Beheizung vorzusehen. Dazu eignen sich beispielsweise so genannte Umluft- oder Trockenlufttrockner, die heiße Luft in einen Behälter blasen. Bei Trockenlufttrocknern wird der Luft vorab Wasser entzogen. Ebenso ist eine Trocknung im Vakuumtrockner denkbar. Um eine gleichmäßige Vorerwärmung des Granulats zu erhalten, ist es weiterhin bevorzugt, wenn das Granulat im Vorlagebehälter gerührt wird. Hierdurch lässt sich ein verbesserter Wärmeübergang erzielen.

Alternativ ist es zum Beispiel auch möglich, das Granulat durch Strahlung zu heizen. So lässt sich dem Granulat beispielsweise durch die Verwendung von Infrarotstrahlung oder Mikrowellenstrahlung, gegebenenfalls auch unter Rühren, Energie und somit Wärme zuführen, bis die entsprechende Temperatur erreicht ist.

Das zur Herstellung des Formteils eingesetzte Blasformwerkzeug weist vorzugsweise eine Temperatur im Bereich von 50 bis 130°C, mehr bevorzugt im Bereich von 60 bis 115°C und insbesondere im Bereich von 80 bis 100°C auf. Durch die Temperierung des Werkzeugs wird eine gute Abformung der Werkzeugkavität unterstützt. Bei einer zu niedrigen Werkzeugtemperatur wird ein Effekt beobachtet, der einer mangelhaften Entlüftung des Werkzeugs ähnelt. So zeichnen sich zum Beispiel Formtrennlinien deutlich auf dem Bauteil ab und die Werkzeugkavität wird mangelhaft abgebildet. Auch für die Vorwegnahme einer späteren Nachschwindung des Formteils ist eine erhöhte Werkzeugtemperatur erforderlich. Damit lässt sich ein nachgeschalteter Temperprozess gegebenenfalls vermeiden, da das hergestellte Formteil die Endmaße bereits größtenteils erreicht hat und nur wenig nachschwindet.

Um das Formteil durch Blasformen zu erzeugen, besteht das Werkzeug im Allgemeinen aus zwei Hälften, die den im Extruder hergestellten Schlauch unter Ausbildung von Quetschnähten zum Formteil ausformen. Hierzu werden die zwei Hälften um den Schlauch zusammengefügt und ein Dorn in den Schlauch eingebracht. Durch den Dorn wird ein geeignetes Gas in den Schlauch eingeblasen. Der Druck, mit dem das Gas eingeblasen wird, liegt vorzugsweise im Bereich von 2 bis 20 bar. Durch den Druck wird der Schlauch gegen das Werkzeug gepresst, so dass der Schlauch die Negativform des Werkzeugs abbildet. Als Gas, das in den Schlauch eingeblasen wird, wird üblicherweise Luft verwendet. Das Gas, das in den Schlauch eingeblasen wird, kann auch temperiert oder zum Zweck hoher Wärmeabfuhr mit Wasserdampf angereichert werden. Außer Luft können auch andere Gase, zum Beispiel gegenüber dem eingesetzten Polyoxymethylenpolymerisat inerte Gase, verwendet werden. Ein weiteres geeignetes Gas ist zum Beispiel Stickstoff.

Um eine homogene Schmelze zu erhalten, weist der Extruder vorzugsweise eine Länge im Bereich von 15 bis 30·D auf. D ist dabei der Schneckendurchmesser. Ein zum Aufschmelzen und Extrudieren des Schlauches geeigneter Extruder weist üblicherweise neben der genuteten Einzugszone mindestens zwei weitere Zonen auf. Üblicherweise schließt sich an die Einzugszone eine Aufschmelzzone und daran eine Ausstoßzone oder Meteringzone an. Im Bereich der der Einzugszone nachfolgenden Zonen wird der Extruder geheizt. Die Schnecke kann eine konstante Gangtiefe und Gangsteigung aufweisen, alternativ ist es jedoch auch möglich, eine Schnecke einzusetzen, bei der sich die Gangsteigung ändert, die Gangtiefe ändert oder die neben einem üblichen eingesetzten Wendelgang auch zum Beispiel Mischteile oder Scherteile aufweist.

Üblicherweise eingesetzte Mischteile sind zum Beispiel solche, bei denen im Schneckensteg Durchbrüche ausgebildet sind, alternativ können im Schneckenkanal zum Beispiel auch Stifte vorgesehen sein, weiterhin ist es auch möglich, im Mischteil einen der üblichen Gewinderichtung des Kanals entgegengerichteten Kanal mit Durchbrüchen auszubilden, ferner ist es möglich, auf der Schnecke Zahnscheiben auszubilden oder Nocken im Zylinder und auf der Schnecke vorzusehen. Auch können so genannte Pineapple- oder Rapra-Mischteile eingesetzt werden.

Als Scherteile eignen sich zum Beispiel Schertorpedos, Troester-Scherteile oder Maddock-Scherteile oder auch ein Ring auf der Schnecke, durch den ein Stauraum erzeugt wird.

Neben den vorstehend genannten Zonen ist es weiterhin möglich, zum Beispiel auch mindestens eine Entgasungszone vorzusehen, in der die Schmelze entgast wird. Übliche Entgasungszonen weisen einen Dorn oberhalb der Schnecke im Zylinder auf, durch die das Gas abgeführt wird.

Geeignete und üblicherweise in Extrudern eingesetzte Schneckenbauarten sind dem Fachmann bekannt.

Um das Aufschmelzverhalten des Polyoxymethylenpolymerisats zu verbessern, ist es beispielsweise auch möglich, Barriereschnecken einzusetzen. In diesen wird der noch aufzuschmelzende Feststoff von der Schmelze durch einen Barrieresteg getrennt.

Die genutete Einzugszone weist vorzugsweise eine Länge im Bereich von 3 bis 6·D auf, wobei auch hier D der Schneckendurchmesser ist. Als Schneckendurchmesser im Sinne der vorliegenden Erfindung wird dabei der Außendurchmesser der Schnecke verstanden. Die Länge der Einzugszone ist hierdurch ausreichend groß, um einen so großen Druckaufbau des Polyoxymethylenpolymerisat-Granulats, das der Einzugszone zugegeben wird, aufzubauen, damit eine gleichmäßige Förderung des Polymerisats durch den Extruder gewährleistet wird. Eine für das erfindungsgemäße Verfahren geeignete Einzugszone weist üblicherweise 4 bis 8 Nuten auf, die in axialer Richtung verlaufen. Alternativ ist es jedoch auch möglich, zum Beispiel Wendelnuten einzusetzen. Wenn Wendelnuten eingesetzt werden, so können diese sowohl in Drehrichtung der Schnecke als auch entgegen der Drehrichtung der Schnecke ausgeführt sein. Bevorzugt sind jedoch axial verlaufende Nuten. Im Verlauf der Einzugszone nimmt die Nuttiefe ab, so dass die Nuten zum Ende der Einzugszone hin auslaufen.

Für das erfindungsgemäße Verfahren geeignete Nuten weisen zum Beispiel einen rechteckförmigen, kreissegmentförmigen oder dreieckförmigen Querschnitt auf. Bevorzugt werden Nuten mit einem rechteckförmigen Querschnitt eingesetzt.

Erfindungsgemäß wird die Einzugszone auf eine Temperatur im Bereich von 100 bis 230°C geheizt. Hierzu sind in der Einzugszone im Zylinder üblicherweise Kanäle vorgesehen, die von einem Temperiermedium durchströmt werden können. Als Temperiermedium können zum Beispiel Wasser, vorzugsweise unter Druck, oder Temperieröle eingesetzt werden. Bevorzugt werden zum Heizen der Einzugszone Temperieröle verwendet. Weiterhin ist es auch möglich, die Einzugszone sowie den gesamten Extruder über elektrische Heizbänder mit Thermoelementen zu temperieren.

Um zu vermeiden, dass Wärme von den der Einzugszone nachfolgenden Zonen an den Zylindermantel der Einzugszone übertragen wird, ist es üblich, zwischen der Einzugszone und den nachfolgenden Zonen im Zylinder des Extruders eine Wärmetrennung vorzusehen. Eine solche Wärmetrennung kann zum Beispiel durch Einsatz einer Scheibe aus einem schlecht wärmeleitenden Material, das gegenüber den im Extruderzylinder auftretenden Temperaturen stabil ist, realisiert werden. Geeignete Wärmetrennungen sind dem Fachmann bekannt und werden auch bei heute üblichen Einschneckenextrudem mit genuteter Einzugszone eingesetzt. Da erfindungsgemäß die Einzugszone geheizt wird, ist die Wärmetrennung hier jedoch nicht unbedingt erforderlich.

Um das Polyoxymethylenpolymerisat aufzuschmelzen, werden die sich an die Einzugszone anschließenden Zonen auf eine Temperatur im Bereich von 180 bis 230°C aufgeheizt. Die Temperatur liegt dabei vorzugsweise mehr als 30 K über der Schmelztemperatur des Polyoxymethylenpolymerisats. Durch die entsprechende Temperatur erfolgt zunächst ein Anschmelzen und dann ein Aufschmelzen des Polymerisats. Durch eine geeignete Schneckengeometrie wird eine Homogenisierung der Schmelze erzielt. Die Beheizung der der Einzugszone nachfolgenden Zonen erfolgt zum Beispiel ebenfalls durch im Zylinder ausgebildete Heizkanäle, die von einem Temperiermedium durchströmt werden. Als Temperiermedium kann das gleiche Temperiermedium eingesetzt werden, wie es auch zur Beheizung der Einzugszone verwendet wird. Üblicherweise wird der Zylinder in einzelne Zonen eingeteilt, die jeweils von einem separaten Temperierkreislauf beheizt werden. Hierdurch ist es auch möglich, die einzelnen Zonen auf unterschiedliche Temperaturen zu erwärmen. Insbesondere ist es bevorzugt, wenn die Temperatur, auf die die sich an die Einzugszone anschließenden Zonen aufgeheizt werden, von der Einzugszone zum Werkzeug hin abnimmt. Die Temperaturdifferenz zwischen maximaler und minimaler Temperatur liegt dabei vorzugsweise im Bereich von 10 bis 50 K, insbesondere im Bereich von 20 bis 40 K, beispielsweise bei 30 K. Die abnehmende Temperatur kann dabei zum Beispiel dadurch realisiert werden, dass die einzelnen Zonen jeweils auf unterschiedliche Temperaturen mit abnehmender Temperatur erwärmt werden.

Neben einer Beheizung mit einem Temperiermedium ist auch eine Beheizung des Extruders durch elektrische Heizelemente möglich. Zusätzlich können zur Temperaturregelung, zum Beispiel um kurzfristige Temperaturspitzen abzumildern, Kühlvorrichtungen, beispielsweise in Form von Gebläsen vorgesehen sein. Die Temperierung des Extruders erfolgt vorzugsweise derart, dass die Massetemperatur der Schmelze am Düsenaustritt im Bereich zwischen 180 und 230°C liegt.

Das so aufgeschmolzene und homogenisierte Polyoxymethylenpolymerisat wird dann durch ein geeignetes Extruderwerkzeug am Ende des Extruders zu einem Schlauch extrudiert. Der Schlauch wird dem Blasformwerkzeug zugeführt und im Blasformwerkzeug zum Formteil geformt.

Formteile, die durch das erfindungsgemäße Verfahren hergestellt werden können, sind zum Beispiel Behälter, Tanks oder Speicher für feste, pastöse, flüssige oder gasförmige Medien, Töpfe, Eimer, Kanister, Flaschen und Hohlkörper im allgemeinen Sinn.

Behälter oder Speicher, die durch das erfindungsgemäße Verfahren hergestellt werden können, sind zum Beispiel Behälter und Druckspeicher für Hydrauliköle und andere Fluide der Maschinentechnik, beispielsweise Fette, Kühlwasser, Treibstoffe oder andere Betriebsmittel, Behälter oder Druckspeicher für Gase und gasförmige Treibstoffe, insbesondere als Inliner für Tanksysteme, Behältnisse für Chemikalien, die möglichst wenig durch die Behältniswandung diffundieren sollen, oder auch Behältnisse für Lebensmittel, Getränke, Futtermittel, die zum Beispiel vor Permeation im Allgemeinen und insbesondere vor Sauerstoff geschützt werden müssen. Durch das erfindungsgemäße Verfahren hergestellte Töpfe oder Eimer können zum Beispiel zur Aufbewahrung von Gütern genutzt werden. Diese lassen sich zum Beispiel durch Deckel oder aufgeschweißte Folien verschließen.

Behältnisse für Lebensmittel oder Getränke, die durch das erfindungsgemäße Verfahren hergestellt werden, sind zum Beispiel Becher oder insbesondere Flaschen.

Die durch das erfindungsgemäße Verfahren hergestellten Formteile können durch jedes beliebige weitere Verarbeitungsverfahren weiterverarbeitet werden. So lassen sich die Teile zum Beispiel einfärben oder bedrucken.

Neben der Herstellung von Formteilen aus nur einem Polymer ist es auch möglich, beispielsweise mehrlagige Formteile herzustellen. Hierzu werden zum Beispiel Schläuche im Coextrusionsverfahren hergestellt, die dann im Blasformwerkzeug zum eigentlichen Formteil umgeformt werden.

### Beispiel

Aus einem Polyoxymethylencopolymerisat, das aufgebaut ist aus 96,9 bis 96,7 Gew.-% Trioxan, ca. 3 Gew.-% Butandiolformal und 0,1 bis 0,3 Gew.-% Diglycerindiformal, wird ein Hohlkörper durch ein Blasformverfahren hergestellt. Das Polyoxymethylen-Copolymerisat wird in einem Extruder mit genuteter Einzugszone aufgeschmolzen, wobei die Einzugszone auf eine Temperatur von 220°C erwärmt wird. Das zugeführte Granulat des Polyoxymethylen-Copolymerisats weist eine Temperatur von 110°C auf. Im Extruder wird ein Temperaturverlauf eingestellt, der von 220° auf 190°C zum Werkzeug hin abnimmt. Aus dem Polyoxymethylen-Copolymerisat wird ein Schlauch extrudiert, der einem Blasformwerkzeug zugeführt wird. Das Werkzeug wird auf eine Temperatur von 120°C temperiert. Durch. Einblasen von Luft bei einem Druck von 8 bar wird der Hohlkörper geformt.

Es wird ein zweiter Hohlkörper aus dem gleichen Material gefertigt, wobei die Einzugszone gemäß gängigen Verfahren auf 15°C gekühlt wird, das Granulat nicht vorgewärmt wird und das Werkzeug auf 20°C gekühlt wird. Es wird jeweils ein Hohlkörper gebildet, aus dem Zugstäbe geschnitten werden. Darüber hinaus werden an weiteren Hohlkörpern Berstdruckprüfungen unter Wasserinnendruck durchgeführt.

Die aus den Hohlkörpern mit geheiztem Material, geheizter Einzugszone und geheiztem Werkzeug nach dem erfindungsgemäßen Verfahren hergestellten Zugstäbe weisen eine Bruchdehnung im Bereich von 15 bis 23 % auf. Der Berstdruck dieser Hohlkörper wird zu 30 bar bestimmt. Die Bruchdehnung der Zugstäbe, die aus dem Hohlkörper geschnitten wurden, der durch das Verfahren mit gekühlter Einzugszone hergestellt wurde, liegt im Bereich zwischen 6 und 11 %. Der ermittelte Berstdruck liegt bei 25 bar. Das erfindungsgemäße Verfahren erlaubt somit die Herstellung von Polyoxymethylen-Hohlkörpem mit signifikant verbesserten mechanischen Eigenschaften.

## Patentansprüche

1. Verfahren zur Herstellung von Formteilen aus einem Polyoxymethylenpolymerisat durch Blasformen, folgende Schritte umfassend:
(a) Extrudieren des Polyoxymethylenpolymerisats zu einem Schlauch mit einem Extruder mit genuteter Einzugszone, wobei die Einzugszone auf eine Temperatur im Bereich von 100 bis 230°C geheizt wird,
(b) Einbringen des extrudierten Schlauches aus dem Polyoxymethylenpolymerisat in ein Blasformwerkzeug,
(c) Erzeugen des Formteils aus dem extrudierten Schlauch im Blasformwerkzeug.

2. Verfahren gemäß Anspruch 1, **dadurch gekennzeichnet, dass** das Polyoxymethylenpolymerisat dem Extruder als Granulat zugegeben wird, wobei das Granulat auf eine Temperatur im Bereich von 60 bis 150°C vorgeheizt wird.

3. Verfahren gemäß Anspruch 1 oder 2, **dadurch gekennzeichnet, dass** das Blasformwerkzeug eine Temperatur im Bereich von 50 bis 130°C aufweist.

4. Verfahren gemäß einem der Ansprüche 1 bis 3, **dadurch gekennzeichnet, dass** der Extruder eine Länge im Bereich von 15 bis 30·D aufweist, wobei D der Schneckendurchmesser ist.

5. Verfahren gemäß einem der Ansprüche 1 bis 4, **dadurch gekennzeichnet, dass** die genutete Einzugszone eine Länge im Bereich von 3 bis 6·D aufweist, wobei D der Schneckendurchmesser ist.

6. Verfahren gemäß einem der Ansprüche 1 bis 5, **dadurch gekennzeichnet, dass** die sich an die Einzugszone anschließenden Zonen auf eine Temperatur im Bereich von 180 bis 230°C aufgeheizt werden.

7. Verfahren gemäß einem der Ansprüche 1 bis 6, **dadurch gekennzeichnet, dass** die Massetemperatur der Schmelze am Düsenaustritt 180 bis 210°C beträgt.

8. Verfahren gemäß einem der Ansprüche 1 bis 7, **dadurch gekennzeichnet, dass** das Polyoxymethylenpolymerisat aufgebaut ist aus:
A) 99 bis 99,99 Gew.-% mindestens eines Polyoxymethylenhomo- oder -copolymerisats,
B) 0,01 bis 1 Gew.-% eines Vernetzers.

9. Verfahren gemäß Anspruch 8, **dadurch gekennzeichnet, dass** der Vernetzer B) eine bifunktionelle Verbindung der allgemeinen Formel 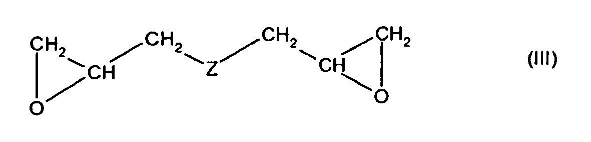 und/oder 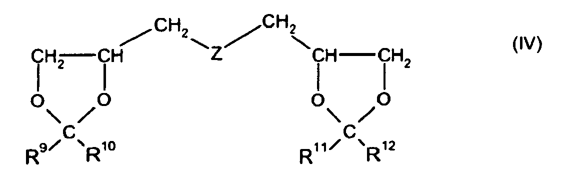 wobei
Z eine chemische Bindung, -O-, -OR⁶O-, -R⁷-, -R⁷OR⁸-, -(O-CH₂-CH₂)ₙ-O- oder -(O-CH₂)ₙ-O- ist,
R⁶ C₁-C₈-Alkylen oder C₃-C₈-Cycloalkylen,
R⁷ und R⁸ jeweils unabhängig voneinander eine C₁-C₁₂-Alkylengruppe
R⁹ bis R¹² jeweils unabhängig voneinander Wasserstoff oder eine C₁-C₄-Alkylgruppe bedeuten und
n eine Zahl zwischen 1 und 4 ist.

10. Verfahren gemäß Anspruch 9, **dadurch gekennzeichnet, dass** Z Sauerstoff ist.

11. Verfahren gemäß Anspruch 9, **dadurch gekennzeichnet, dass** der Vernetzer eine bifunktionelle Verbindung der allgemeinen Formel IV ist, wobei Z Sauerstoff und R⁹ bis R¹² jeweils Wasserstoff sind.

12. Verfahren gemäß einem der Ansprüche 1 bis 11, **dadurch gekennzeichnet, dass** die Formteile Behälter, Tanks oder Speicher für feste, flüssige, pastöse oder gasförmige Medien, Töpfe, Eimer, Kanister, Flaschen und Hohlkörper im allgemeinen Sinn sind.

## Claims

1. A process for the production of moldings composed of a polyoxymethylene polymer via blow molding, comprising the following steps:
(a) extrusion of the polyoxymethylene polymer to give tubing, using an extruder with a grooved feed section, where the feed section is heated to a temperature in the range from 100 to 230°C,
(b) introduction of the extruded tubing composed of the polyoxymethylene polymer into a blow mold,
(c) production of the molding composed of the extruded tubing in the blow mold.

2. The process according to claim 1, wherein the polyoxymethylene polymer is in the form of pellets when added to the extruder, where the pellets are preheated to a temperature in the range from 60 to 150°C.

3. The process according to claim 1 or 2, wherein the temperature of the blow mold is from 50 to 130°C.

4. The process according to any of claims 1 to 3, wherein the length of the extruder is from 15 to 30·D, where D is the diameter of the screw.

5. The process according to any of claims 1 to 4, wherein the length of the grooved feed section is from 3 to 6·D, where D is the diameter of the screw.

6. The process according to any of claims 1 to 5, wherein the sections following the feed section are heated to a temperature in the range from 180 to 230°C.

7. The process according to any of claims 1 to 6, wherein the temperature of the melt at the die outlet is from 180 to 210°C.

8. The process according to any of claims 1 to 7, wherein the polyoxymethylene polymer is composed of:
A) from 99 to 99.99% by weight of at least one polyoxymethylene homo- or copolymer,
B) from 0.01 to 1% by weight of a crosslinking agent.

9. The process according to claim 8, wherein the crosslinking agent B) is a bifunctional compound of the general formula 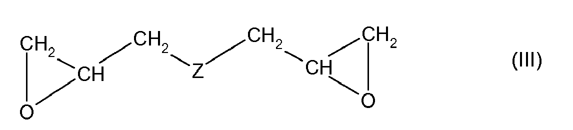 and/or 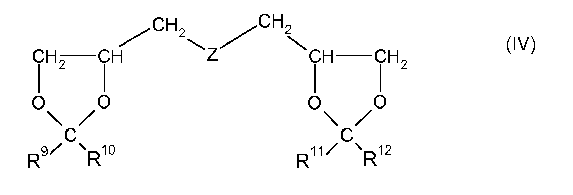 where
Z is a chemical bond, -0-, -OR⁶O-, -R⁷-, -R⁷OR⁸-, -(O-CH₂-CH₂)ₙ-O-, or -(O-CH₂)ₙ-O-,
R⁶ is C₁-C₈-alkylene or C₃-C₈-cycloalkylene,
each of R⁷ and R⁸, independently of the other, is a C₁-C₁₂-alkylene group,
each of R⁹ to R¹², independently of the others, is hydrogen or a C₁-C₄-alkyl group, and
n is a number from 1 to 4.

10. The process according to claim 9, wherein Z is oxygen.

11. The process according to claim 9, wherein the crosslinking agent is a bifunctional compound of the general formula IV, where Z is oxygen and each of R⁹ to R¹² is hydrogen.

12. The process according to any of claims 1 to 11, wherein the moldings are containers, tanks, or storage vessels for media which are solids, liquids, pastes, or gases, or the moldings are pots, buckets, canisters, bottles, or hollow bodies in the general sense.

## Revendications

1. Procédé pour la production de pièces moulées à base d'un polymérisat polyoxyméthylène par moulage par soufflage, comprenant les étapes suivantes :
(a) extrusion du polymérisat polyoxyméthylène en un tube par une extrudeuse à zone d'alimentation rainurée, la zone d'alimentation étant chauffée à une température dans la plage de 100 à 230 °C,
(b) introduction du tube extrudé à base du polymérisat polyoxyméthylène dans un outil de moulage par soufflage,
(c) production de la pièce moulée à partir du tube extrudé, dans l'outil de moulage par soufflage.

2. Procédé selon la revendication 1, **caractérisé en ce que** le polymérisat polyoxyméthylène est introduit sous forme de granulé dans l'extrudeuse, le granulé étant préchauffé à une température dans la plage de 60 à 150 °C.

3. Procédé selon la revendication 1 ou 2, **caractérisé en ce que** l'outil de moulage par soufflage présente une température dans la plage de 50 à 130 °C.

4. Procédé selon l'une quelconque des revendications 1 à 3, **caractérisé en ce que** l'extrudeuse a une longueur dans la plage de 15 à 30·D, D étant le diamètre de la vis.

5. Procédé selon l'une quelconque des revendications 1 à 4, **caractérisé en ce que** la zone d'alimentation rainurée a une longueur dans la plage de 3 à 6·D, D étant le diamètre de la vis.

6. Procédé selon l'une quelconque des revendications 1 à 5, **caractérisé en ce que** les zones faisant suite à la zone d'alimentation sont chauffées jusqu'à une température dans la plage de 180 à 230 °C.

7. Procédé selon l'une quelconque des revendications 1 à 6, **caractérisé en ce que** la température de la masse fondue à la sortie de la filière vaut de 180 à 210 °C.

8. Procédé selon l'une quelconque des revendications 1 à 7, **caractérisé en ce que** le polymérisat polyoxyméthylène est constitué de :
A) 99 à 99,99 % en poids d'au moins un homo- ou copolymérisat de polyoxyméthylène,
B) 0,01 à 1 % en poids d'un agent de réticulation.

9. Procédé selon la revendication 8, **caractérisé en ce que** l'agent de réticulation B) est un composé bifonctionnel de formule générale 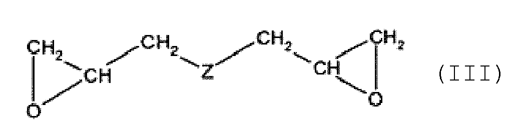 et/ou 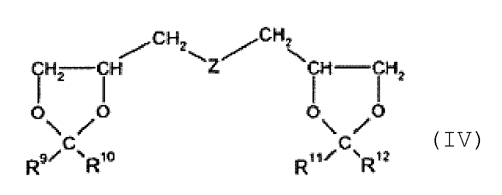 où
Z est une liaison chimique, -O-, -OR⁶O-, -R⁷-, -R⁷OR⁸-, -(O-CH₂-CH₂)ₙ-O- ou -(O-CH₂)ₙ-O-,
R⁶ est un groupe alkylène en C₁-C₈ ou cycloalkylène en C₃-C₈,
R⁷ et R⁸ représentent chacun indépendamment l'un de l'autre un groupe alkylène en C₁-C₁₂
R⁹ à R¹² représentent chacun indépendamment l'un de l'autre un atome d'hydrogène ou un groupe alkyle en C₁-C₄ et
n représente un nombre compris entre 1 et 4.

10. Procédé selon la revendication 9, **caractérisé en ce que** Z est un atome d'oxygène.

11. Procédé selon la revendication 9, **caractérisé en ce que** l'agent de réticulation est un composé bifonctionnel de formule générale IV, Z étant un atome d'oxygène et R⁹ à R¹² représentant chacun un atome d'hydrogène.

12. Procédé selon l'une quelconque des revendications 1 à 11, **caractérisé en ce que** les pièces moulées sont des récipients, citernes ou réservoirs pour milieux solides, liquides, pâteux ou gazeux, des pots, des seaux, des bidons, des bouteilles et des corps creux dans le sens général.
